Europäisches Patentamt

(19) European Patent Office

Office européen des brevets

(11) Numéro de publication: **0 078 207**
**A2**

(12) # DEMANDE DE BREVET EUROPEEN

(21) Numéro de dépôt: **82401938.4**

(22) Date de dépôt: **22.10.82**

(51) Int. Cl.³: **F 28 D 21/00**

(30) Priorité: 22.10.81 FR 8119848
20.08.82 FR 8214413

(43) Date de publication de la demande:
04.05.83 Bulletin 83/18

(84) Etats contractants désignés:
AT BE CH DE GB IT LI NL

(71) Demandeur: CHAFFOTEAUX ET MAURY
2, rue Chaintron
F-92120 Montrouge(FR)

(72) Inventeur: Vergne, Bernard
142, boulevard de Lozère
F-91120 Palaiseau(FR)

(72) Inventeur: Poitevin, Daniel
25, rue Henri Rochette
F-93220 Gagny(FR)

(74) Mandataire: Behaghel, Pierre et al,
CABINET PLASSERAUD 84 rue d'Amsterdam
F-75009 Paris(FR)

(54) Perfectionnements aux dispositifs pour récupérer des calories des fumées sortant des chaudières à gaz.

(57) Il s'agit d'un dispositif pour récupérer certaines des calories résiduelles comprises par les fumées (F) sortant d'une chaudière à gaz après avoir traversé un échangeur principal (2) horizontal avec une faible perte de charge. On fait comprendre à ce dispositif un échangeur auxiliaire (5) relativement plat et mince orienté verticalement, offrant une faible résistance à sa traversée horizontale par un gaz, et disposé au-dessus d'une auge (18) de collecte de condensats.

EP 0 078 207 A2

./...

Fig. 2

## Perfectionnements aux dispositifs pour récupérer des calories des fumées sortant des chaudières à gaz.

L'invention est relative aux dispositifs pour récupérer certaines des calories résiduelles contenues dans les fumées qui sortent d'une chaudière à gaz après avoir cédé la plus grande partie de leurs calories à un courant d'eau en traversant verticalement de bas en haut un échangeur de chaleur - appelé échangeur "principal" dans la suite - lui-même parcouru par ce courant d'eau.

On sait que le courant ascendant de fumées quittant un tel échangeur principal contient de l'eau sous forme de vapeur, vu sa température relativement élevée, généralement comprise entre 100 et 200°C.

Lorsque ces fumées sont refroidies au-dessous de la température de rosée - généralement de l'ordre de 60°C - à laquelle l'eau commence à se condenser dans celles-ci, elle cèdent les calories qui ont été utilisées pour vaporiser cette eau, c'est-à-dire sa chaleur latente de vaporisation.

Il a déjà été proposé de récupérer ces calories en faisant traverser par les fumées à refroidir un échangeur auxiliaire.

Mais les modes de réalisation proposés jusqu'à ce jour pour de tels échangeurs auxiliaires présentaient un certain nombre d'inconvénients et en particulier le suivant : du fait de la perte de charge subie par les fumées en traversant un tel échangeur auxiliaire, il était nécessaire de prévoir des mesures spéciales pour évacuer ces fumées après leur avoir fait traverser cet échangeur, par exemple en faisant appel à un appareil d'extraction mécanique ou même en réchauffant légèrement lesdites fumées.

L'invention a pour but, surtout, de supprimer ces inconvénients et en outre, dans les réalisations préférées, de simplifier la construction et la maintenance des dispositifs de récupération considérés et/ou de réduire leur encombrement.

A cet effet, les dispositifs de récupération en question selon l'invention sont essentiellement caractérisés en ce que leur échangeur auxiliaire est constitué par une structure relativement plate et mince présentant une faible résistance à sa traversée par les gaz dans la direction de son épaisseur, c'est-à-dire perpendiculairement à son plan moyen, et est monté, avec son plan moyen vertical ou sensiblement tel, de façon à être traversé par les fumées à refroidir dans la direction de son épaisseur.

Dans des modes de réalisation préférés, on a recours en outre à l'une et/ou à l'autre des dispositions suivantes :

- la structure constitutive de l'échangeur auxiliaire est formée, d'une façon connue en soi, pour les échangeurs principaux, par un serpentin dont les différents brins rectilignes parallèles sont entretoisés entre eux par des plaques parallèles formant ailettes,

- la structure constitutive de l'échangeur auxiliaire est identique à celle constitutive de l'échangeur principal,

- dans le cas où un caisson est prévu pour recueillir les fumées sortant verticalement vers le haut de l'échangeur principal et pour les rabattre horizontalement de façon à les introduire dans l'échangeur auxiliaire, ce caisson est subdivisé en plusieurs couloirs parallèles par au moins une cloison intermédiaire de façon telle que les fumées à refroidir soient réparties sur l'ensemble de la surface d'entrée de l'échangeur auxiliaire,

- l'échangeur auxiliaire est disposé au-dessus de l'échangeur principal et les caissons amont et aval qui guident respectivement les fumées de la sortie de l'échangeur principal à l'entrée de l'échangeur auxiliaire et de la sortie de l'échangeur auxiliaire à une embouchure d'évacuation sont contenus pour au moins leur plus grande partie dans l'encombrement horizontal de la chaudière, qu'ils surmontent,

- dans un dispositif selon l'alinéa précédent, le plan moyen de l'échangeur auxiliaire est vertical et passe par le milieu de l'échangeur principal,

- dans un dispositif selon l'alinéa précédent, le caisson aval est dessiné de façon à guider les fumées qui le traversent vers un passage situé immédiatement au-dessus de l'échangeur auxiliaire,

- un écran perforé dont le degré d'ouverture par unité de surface croît vers le bas est interposé sur la trajectoire des fumées à la sortie de l'échangeur auxiliaire.

L'invention comprend, mises à part ces dispositions principales, certaines autres dispositions qui s'utilisent de préférence en même temps et dont il sera plus explicitement question ci-après.

Dans ce qui suit, l'on va décrire deux modes de réalisation préférés de l'invention en se référant aux dessins ci-annexés d'une manière bien entendu non limitative.

La figure 1, de ces dessins, montre en coupe verticale un dispositif de récupération de calories établi conformément à l'invention.

La figure 2 montre en coupe verticale un autre mode de réalisation de dispositif de récupération de calories conforme à l'invention.

La figure 3 est un schéma explicatif.

D'une façon connue en soi, la chaudière à gaz à équiper comprend dans chaque cas un corps de chauffe 1 dont la partie supérieure est occupée par un échangeur de calories 2 désigné dans la suite par l'expression "échangeur principal".

Cet échangeur présente la forme générale d'un treillis rectangulaire horizontal relativement plat et mince parcouru horizontalement par de l'eau à chauffer et offrant une faible résistance à sa traversée par le courant gazeux vertical ascendant des produits de combustion ou "fumées" F de la chaudière.

Il est avantageusement constitué par un "bloc à ailettes", c'est-à-dire par un serpentin 3 parcouru par l'eau à

4 0078207

chauffer, composé d'une pluralité de brins parallèles rectilignes raccordés entre eux par des coudes semi-circulaires et entretoisés par des plaques verticales parallèles 4 formant ailettes.

Ce sont les fumées F s'échappant verticalement du dessus de cet échangeur 2 que l'on se propose de refroidir selon l'invention en vue de récupérer une partie appréciable des calories résiduelles qu'elles entraînent.

A cet effet l'on a recours, selon l'invention, à un second échangeur de calories 5, ou échangeur "auxiliaire", présentant la forme générale d'un treillis relativement plat et mince parcouru par de l'eau à préchauffer, selon une trajectoire parallèle à son plan moyen, dans un circuit étanche approprié, et offrant une faible résistance à sa traversée par les gaz selon la direction perpendiculaire audit plan moyen.

En d'autres termes, les gaz traversant cet échangeur dans cette direction perpendiculaire au plan moyen de l'échangeur, c'est-à-dire dans la direction de la plus petite dimension ou "épaisseur" dudit échangeur, ne subissent qu'une faible perte de charge lors de cette traversée.

Il est à noter que, dans les échangeurs auxiliaires en question, tout comme dans les échangeurs principaux ci-dessus décrits, les directions de cheminement empruntées respectivement par les deux fluides participant à l'échange (fumées et eau) sont intégralement "croisées", c'est-à-dire perpendiculaires entre elles en tous points, les fumées traversant en une seule passe la nappe plane formée par les tubes à eau : il n'est pas question ici de faire cheminer les fumées parallèlement à cette nappe et perpendiculairement auxdits tubes et encore moins de rendre les deux directions considérées parallèles entre elles et de sens opposés comme c'est le cas pour les échanges à contre-courant.

Bien que ce ne soit pas indispensable, il est particulièrement avantageux de constituer l'échangeur auxiliaire de la même façon que l'échangeur principal, et en particulier par un serpentin 6 parcouru par l'eau à préchauffer et dont les brins rectilignes parallèles sont raccordés entre eux par des coudes semi-circulaires et entretoisés par des plaques parallèles 7 en métal conducteur formant ailettes.

Ces deux échangeurs principal 2 et auxiliaire 5 peuvent même être totalement identiques entre eux.

On oriente le plan moyen de l'échangeur auxiliaire 5 selon une direction inclinée sur la verticale d'un angle au plus égal à 45°, cet angle étant de préférence nul, comme dans les modes de réalisation illustrés.

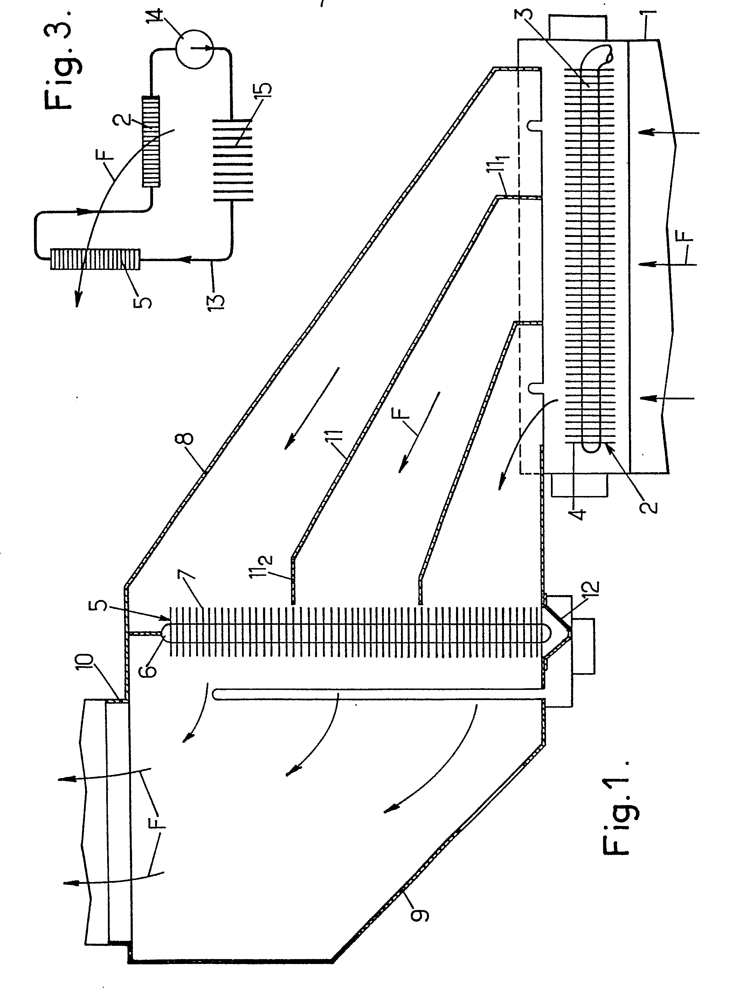

Dans le premier de ces modes, illustré sur la figure 1, on dispose ledit échangeur auxiliaire horizontalement à l'écart de l'échangeur principal 2 et de façon telle que sa base soit située sensiblement au même niveau que cet échangeur principal.

On prévoit en outre :

- un premier caisson 8 pour recevoir les fumées F sortant verticalement de l'échangeur 2, au-dessus de celui-ci, et pour rabattre leur trajectoire de façon à les envoyer sur l'échangeur auxiliaire 5 selon une direction horizontale ou tout au moins perpendiculaire au plan moyen de cet échangeur,

- et un second caisson 9 pour recevoir les fumées sortant de cet échangeur 5 et pour redresser leur trajectoire de façon à les guider vers une embouchure supérieure 10 orientée vers le haut.

L'extrémité inférieure amont du premier caisson 8 est agencée de façon à pouvoir être facilement montée sur le sommet du corps de chauffe 1, par exemple par emboîtement et boulonnage, et l'extrémité supérieure aval du second caisson 9 est agencée de façon à pouvoir être facilement raccordée à une cheminée d'évacuation par l'intermédiaire d'un coupe-tirage ou antirefouleur de type habituel.

Le caisson 9 peut lui-même être agencé de la manière habituelle en un pot de purge destiné à recueillir les condensats résiduels qui peuvent se former dans la cheminée.

Pour assurer un balayage relativement uniforme de la face d'entrée de l'échangeur auxiliaire 5 par les fumées F qui doivent le traverser, on divise avantageusement le premier caisson en plusieurs couloirs voisins à l'aide de cloisons 11.

Ces cloisons sont de préférence constituées par des tôles planes inclinées et prolongées à leur extrémité inférieure par un pan amont $11_1$ vertical et à leur extrémité supérieure par un pan aval $11_2$ horizontal ou sensiblement horizontal.

Le nombre des couloirs ainsi délimités est avantageusement de trois comme illustré, mais il pourrait être plus petit ou plus grand selon les besoins.

Au-dessous de l'échangeur auxiliaire 5 s'étend une auge 12 propre à recueillir par gravité les condensats formés sur cet échangeur par le refroidissement des fumées qui le traversent : dans le mode de réalisation illustré pour lequel l'échangeur est orienté verticalement, cette auge 12 est relativement étroite.

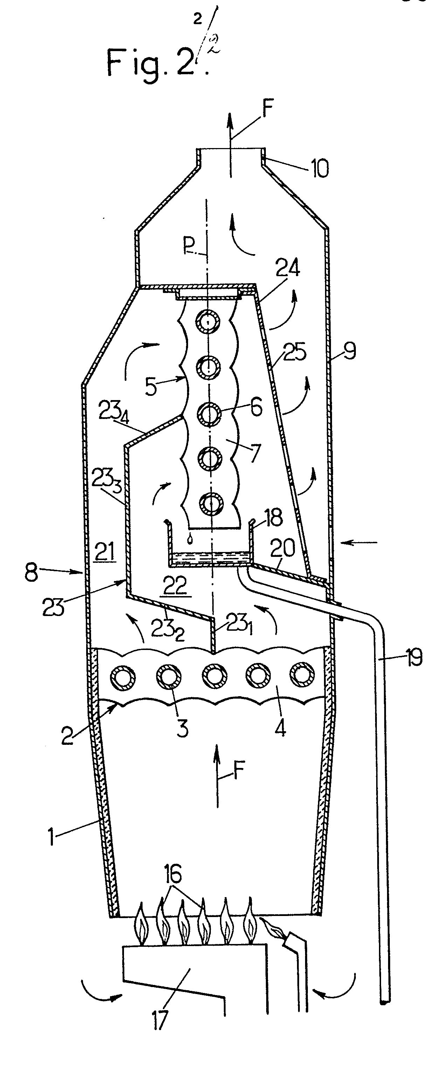

Dans le second mode de réalisation illustré sur la figure 2, les références identiques aux précédentes désignent respectivement des éléments semblables aux précédents.

Dans ce second mode, au lieu de disposer l'échangeur auxiliaire 5 horizontalement à l'écart de l'échangeur principal 2, comme dans le premier mode, on le dispose ici à une distance non nulle au-dessus de cet échangeur principal.

Dans le cas préféré pour lequel l'échangeur auxiliaire 5 est orienté verticalement, son plan vertical moyen P se trouve avantageusement au milieu de l'ensemble, c'est-à-dire passe par le milieu de l'échangeur principal, comme illustré.

Pour éviter que le condensat recueilli sur cet échangeur auxiliaire ne tombe par gravité sur l'échangeur principal 2 et, à travers ce dernier, sur les flammes 16 du brûleur 17 de la chaudière, on dispose sous ledit échangeur auxiliaire une auge collectrice 18 propre à collecter ce condensat, auge dont le fond est raccordé à une tubulure d'évacuation inférieure 19.

Cette tubulure 19 est agencée de façon à contourner le corps de chauffe 1 et à acheminer par gravité le condensat qu'elle reçoit jusqu'à un réceptacle de vidange extérieur à la chaudière, notamment par l'intermédiaire d'un siphon permettant de conserver une certaine étanchéité entre l'intérieur et l'extérieur de cette chaudière.

L'auge 18 et la tubulure 19 sont constituées en un matériau, tel que l'aluminium ou un alliage d'aluminium, résistant correctement à la chaleur et à l'acidité des condensats.

On dimensionne ici les deux caissons de guidage 8 et 9 des fumées de façon telle qu'ils soient contenus au moins pour leur plus grande partie dans l'encombrement horizontal de la chaudière ou plus précisément du corps de chauffe.

Ce dimensionnement réduit, rendu possible par la situation de l'échangeur auxiliaire au-dessus de l'échangeur principal, constitue un avantage important.

La trajectoire suivie par les fumées F dans le premier caisson 8 affecte la forme du S étiré et tronqué : les fumées F qui sortent de l'échangeur principal 2 au-dessous de l'auge 18 longent horizontalement la face inférieure de cette auge dans un premier sens (vers la gauche sur le dessin) de façon à la contourner avant de s'élever et d'être rabattus horizontalement vers l'échangeur auxiliaire dans le sens horizontal inverse du précédent, c'est-à-dire vers la droite sur le dessin.

Il est nécessaire à cet effet de faire comprendre au caisson 8 une tôle 20 horizontale ou sensiblement horizontale formant chicane et empêchant toute communication verticale directe entre le volume disposé juste au-dessus de l'échangeur principal 2 et celui disposé juste à la sortie de l'échangeur auxiliaire 5.

Pour assurer un balayage relativement uniforme de la face d'entrée de l'échangeur auxiliaire 5 par les fumées F qui doivent la traverser, on divise de préférence le caisson 8 en deux couloirs voisins 21, 22 à l'aide d'une cloison 23.

Cette cloison 23 est avantageusement constituée par une tôle plane pliée comprenant successivement :

- un pan vertical $23_1$ s'étendant dans le plan médian P ci-dessus, à partir du milieu de l'échangeur principal 2 jusqu'à la moitié de la distance entre cet échangeur et le fond de l'auge 18,

- un pan horizontal ou oblique $23_2$,

- un pan vertical $23_3$,

- et un pan horizontal ou oblique $23_4$ aboutissant au milieu de la hauteur de la face d'entrée de l'échangeur auxiliaire 5.

La trajectoire suivie par les fumées F dans le second caisson 9 affecte également la forme d'un S étiré et tronqué, ces fumées après leur sortie horizontale de l'échangeur auxiliaire 5 étant rabattues vers le haut, puis horizontalement vers le milieu de l'appareil, c'est-à-dire en sens inverse de leur sortie de l'échangeur 5, avant d'être évacuées vers le haut à travers l'embouchure 10.

Pour améliorer le rendement de l'installation, il peut être avantageux de régler les débits des fumées évacuées hors de l'échangeur auxiliaire 5 en fonction des différents niveaux de ces évacuations.

En effet, en raison du tracé qui est donné à la trajectoire des fumées dans le caisson 8, ces fumées ont naturellement tendance à se concentrer dans les zones les plus hautes de ce caisson, ce qui tend à faire comtribuer davantage à l'échange thermique les régions les plus hautes de l'échangeur 5.

Pour remédier à cet inconvénient, on facilite l'évacuation des fumées à partir des régions les plus basses de cet échangeur 5 en plaçant à proximité de la face de sortie dudit échangeur une plaque 24 verticale ou sensiblement verticale perforée par des ouvertures 25 dont le degré d'ouverture croît vers le bas.

Cette dernière disposition est surtout intéressante lorsque l'on n'est pas limité par des questions de perte de charge, et notamment lorsqu'un organe de ventilation mécanique est prévu dans la conduite d'évacuation des fumées situées en aval de la plaque perforée 24.

Il pourra être judicieux de ne pas la mettre en pratique dans le cas préféré où il n'est prévu aucun tel organe de ventilation mécanique, ce qui est particulièrement avantageux et qui est rendu possible en raison de la très faible perte de charge subie par les fumées en traversant respectivement les deux échangeurs 2 et 5.

Le fonctionnement de chacun des récupérateurs ci-dessus est le suivant.

Comme visible sur la figure 3, la chaudière considérée est généralement destinée à chauffer de l'eau circulant dans un circuit fermé de chauffage central comprenant, outre des tuyauteries de raccordement 13, une pompe de circulation 14, des éléments chauffants 15 tels que des planchers chauffants ou des radiateurs, et les deux échangeurs ci-dessus.

L'ordre de traversée de ces échangeurs par l'eau de retour de chauffage est d'abord l'échangeur auxiliaire 5 et ensuite l'échangeur principal 2.

Cette eau revient des éléments chauffants 15 à une température relativement basse, notamment de l'ordre de 20 à 40°C, alors que la température des fumées F à refroidir parvenant à l'échangeur auxiliaire 5 est généralement encore supérieure à 100°C.

Le contact de ces fumées encore chaudes avec les surfaces métalliques relativement froides de l'échangeur 5 a pour effet de refroidir lesdites fumées jusqu'à la température de rosée, ce qui condense la vapeur d'eau contenue dans ces fumées sur lesdites surfaces, en cédant à ces surfaces la chaleur latente de condensation de cette vapeur.

L'eau qui circule dans l'échangeur 5 est ainsi efficacement préchauffée et le rendement global de la chaudière en est sensiblement augmenté, ce qui permet des économies d'énergie.

Le dispositif de récupération de calories décrit ci-dessus présente en outre un certain nombre d'avantages par rapport à ceux antérieurement connus, en particulier les suivants :

- en raison de la très faible perte de charge subie par les fumées à refroidir lors de leur traversée de l'échangeur auxiliaire, il est généralement inutile de prévoir un extracteur spécial tel qu'un ventilateur pour évacuer ces fumées, le tirage naturel suffisant à cet effet,

- dans les modes de réalisation conformes à la figure 2, le dispositif de récupération peut être monté juste au-dessus de la chaudière qu'il dessert, dans l'encombrement horizontal de celle-ci,

- le dispositif de récupération peut être très facilement adapté sur les chaudières existantes, sans modification de celles-ci ; il peut donc être considéré comme un "accessoire" particulièrement intéressant de ces chaudières, proposable en option aux acheteurs de celles-ci,

- dans les modes de réalisation où l'échangeur auxiliaire est constitué par une structure identique à celle constitutive de l'échangeur principal, les problèmes de fabrication et de maintenance sont considérablement simplifiés.

Comme il va de soi, et comme il résulte d'ailleurs déjà de ce qui précède, l'invention ne se limite nullement à ceux de ses modes d'application et de réalisation qui ont été plus spécialement envisagés ; elle en embrasse, au contraire, toutes les variantes, notamment :

- celles où l'échangeur auxiliaire serait constitué par deux unités identiques à celle constitutive de l'échangeur principal, ces deux unités étant disposées latéralement l'une à côté de l'autre, ou verticalement l'une au-dessus de l'autre, ou encore parallèlement l'une à l'autre de façon à être traversées l'une après l'autre par les fumées à refroidir,

- celles où l'échangeur auxiliaire serait constitué selon le même principe que l'échangeur principal, mais avec une surface d'échange différente, par exemple supérieure,

- celles où l'échangeur auxiliaire serait constitué encore par une structure relativement plate et mince offrant une faible résistance à sa traversée par un gaz perpendiculairement à son plan moyen, mais construit autrement que l'échangeur principal,

- celles où le plan moyen de l'échangeur auxiliaire serait incliné sur la verticale, dans l'un ou l'autre sens.

REVENDICATIONS

1. Dispositif pour récupérer certaines des calories résiduelles contenues dans les fumées (F) qui sortent d'une chaudière à gaz après traversée verticale d'un échangeur de chaleur principal (2), comportant un échangeur auxiliaire (5) monté de façon à être traversé par lesdites fumées, caractérisé en ce que l'échangeur auxiliaire (5) est constitué par une structure relativement plate et mince présentant une faible résistance à sa traversée par les gaz dans la direction de son épaisseur, c'est-à-dire perpendiculairement à son plan moyen, et est monté avec son plan moyen vertical ou sensiblement tel, de façon à être traversé par les fumées à refroidir dans la direction de son épaisseur.

2. Dispositif de récupération selon la revendication 1, caractérisé en ce que la structure constitutive de l'échangeur auxiliaire (5) est formée, d'une façon connue en soi pour les échangeurs principaux, par un serpentin (6) dont les différents brins rectilignes parallèles sont entretoisés entre eux par des plaques parallèles (7) formant ailettes.

3. Dispositif de récupération selon l'une quelconque des précédentes revendications, caractérisé en ce que la structure constitutive de l'échangeur auxiliaire (5) est identique à celle constitutive de l'échangeur principal (2).

4. Dispositif de récupération selon l'une quelconque des précédentes revendications, dans lequel un caisson (8) est prévu pour recueillir les fumées sortant verticalement vers le haut de l'échangeur principal (2) et pour les rabattre horizontalement de façon à les introduire dans l'échangeur auxiliaire (5), caractérisé en ce que ce caisson (8) est subdivisé en plusieurs couloirs parallèles par au moins une cloison intermédiaire (11,23) de façon telle que les fumées à refroidir soient réparties sur l'ensemble de la surface d'entrée de l'échangeur auxiliaire (5).

5. Dispositif de récupération selon l'une quelconque des précédentes revendications, caractérisé en ce que l'échangeur auxiliaire (5) est disposé au-dessus de l'échangeur principal (2) et en ce que les caissons amont (8) et aval (9) qui guident respectivement les fumées (F) de la sortie de l'échangeur principal (2) à l'entrée de l'échangeur auxiliaire (5) et de la sortie de l'échangeur auxiliaire (5) à une embouchure d'évacuation (10) sont contenus pour au moins leur plus grande partie dans l'encombrement horizontal de la chaudière, qu'ils surmontent.

6. Dispositif de récupération selon la revendication 5, caractérisé en ce que le plan moyen (P) de l'échangeur auxiliaire (5) est vertical et passe par le milieu de l'échangeur principal (2).

7. Dispositif de récupération selon l'une quelconque des revendications 5 et 6, caractérisé en ce que le caisson aval (9) est dessiné de façon à guider les fumées qui le traversent vers un passage situé immédiatement au-dessus de l'échangeur auxiliaire (5).

8. Dispositif de récupération selon l'une quelconque des précédentes revendications, caractérisé en ce qu'un écran (24) perforé (en 25) dont le degré d'ouverture par unité de surface croît vers le bas est interposé sur la trajectoire des fumées à la sortie de l'échangeur auxiliaire.

Fig. 3.

Fig.1.

0078207

# Fig. 2.

2/2